# EUROPEAN PATENT APPLICATION

(11) **EP 1 845 531 A1**
(43) Date of publication of application: **17.10.2007**
(21) Application number: 07006648.5
(22) Date of filing: 30.03.2007
(51) Int. Cl.: G11B 33/04

(54) **Paper or cardboard sleeve for CDs or DVDs**

(30) Priority: 12.04.2006 IT MC20060040
(71) Applicant: Sulpizio, Rocco, 63025 Montegiorgio AP (IT); Scarafoni, Maurizio, 60015 Falconara Marittima AN (IT)
(72) Inventor: Sulpizio, Rocco, 63025 Montegiorgio AP (IT); Scarafoni, Maurizio, 60015 Falconara Marittima AN (IT)
(74) Representative: Baldi, Claudio

(57) **Abstract**

The present invention relates to a paper or cardboard sleeve for CDs or DVDs, formed of a folding pair of covers, a front cover (2, 20) and a back cover (3, 30) that is provided with an internal pocket (T) with compartment consisting in a circular housing (A) with the same diameter as the disk (D) and with opening (B) having a semi-circular profile concentric with the circular housing (A).

## Description

The present patent application relates to a paper or cardboard sleeve for CDs or DVDs.

As it is known, CDs and DVDs are typically packed in a standardised plastic case, consisting in a thin square or rectangular box that opens like a book, being formed of a bottom part laterally hinged to a closing cover.

The disk is exactly contained in a circular housing obtained in the said bottom, from which a notched collar projects in central position, designed to be exactly snapped in the hole of the disk to hold it firmly in place.

The main purpose of the present invention is to devise a new model of case for CDs and DVDs, made of paper or cardboard, as a valid alternative to the said plastic cases, whose wide diffusion is considered with concern by those who are aware of the environmental contamination issues caused by disposal of non-biodegradable, solid urban waste.

The said problem has resulted in the design of a case made of biodegradable material, such as paper or cardboard, which requires new means to fix the disk inside the sleeve, being rather difficult and expensive to obtain the typical central projection from paper or cardboard.

In this perspective, although still provided with a book-like structure, the sleeve of the invention is unusually provided with an internal pocket on one of the cover, where the disk is exactly housed, leaving one half of the disk uncovered to make it easy for the user to extract it with his fingers.

For major clarity the description of the sleeve of the invention continues with reference to the enclosed drawings, which are intended for purpose of illustration only and not in a limiting sense, whereby:
- figure 1 is an axonometric view of the sleeve of the invention according to a first preferred embodiment;
- figures 2 to 5 are views of the operative phases that are necessary to produce the aforementioned sleeve.
- figure 6 is an axonometric view of the sleeve of the invention according to a second preferred embodiment;
- figure 7 is an axonometric exploded view of the two elements that form the second embodiment of the sleeve of the invention;
- figure 8 is an axonometric view of one of the elements that form the second embodiment of the sleeve of the invention.

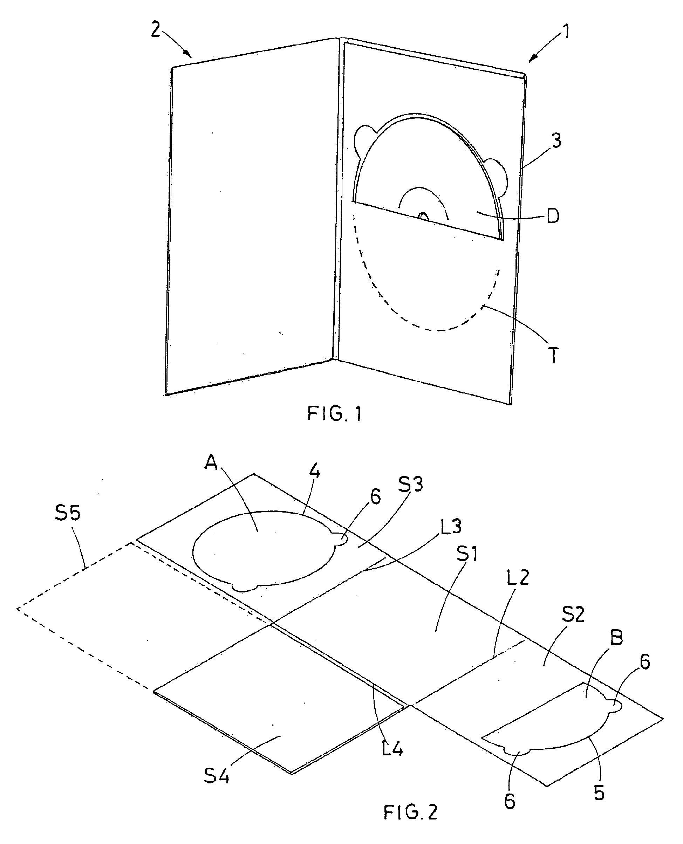

With reference to figures 1 to 5, the sleeve (1) has a book-like configuration, being formed of a folding pair of covers, a front cover (2), and a back cover (3) that is provided with an internal pocket (T) where the disk (D) is exactly housed, leaving one half of the disk uncovered.

More precisely, the internal compartment of the pocket (T) is composed of a circular housing (A) having the same diameter as the disk, whose thickness is the same as the depth of the circular housing (A).

The housing (A) is frontally covered on half of its length, thus generating a sort of semi-circular opening (B) used to insert or extract the disk, leaving one half of the disk uncovered, as mentioned above.

The said sleeve (1) is obtained from a single sheet of paper or cardboard, suitably punched, folded and glued as illustrated in figures 2 to 5.

Figure 2 is a plan view of the said sheet, in which the following four identical rectangular sectors can be identified:
- a central sector (S1)
- an opposite pair of sectors (S2 and S3), respectively under and above the central sector (S1)
- a lateral sector (S4) situated on the left side of the central sector (S1).

A circular opening (4) is obtained on the upper sector (S3) to generate the said circular housing (A) at the end of the production cycle of the sleeve (1).

A semi-circular opening (5) is obtained on the lower sector (S2) to generate the said semi-circular opening (B) at the end of the production cycle of the sleeve (1).

The central sector (S1) is separated from the remaining sectors by thin notches that act as folding line (L2, L3 and L4).

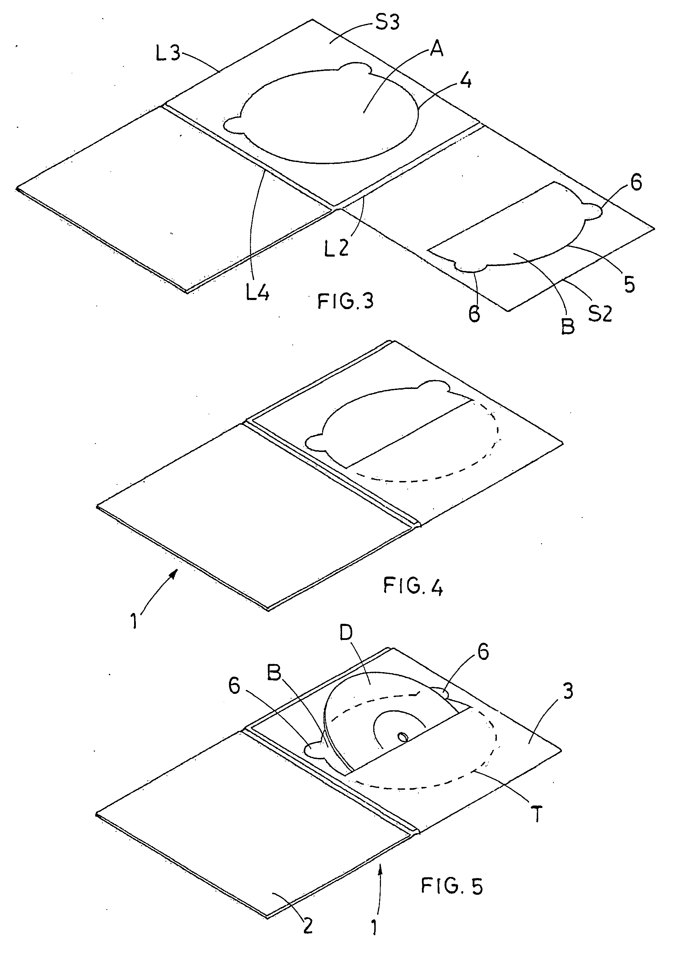

The upper sector (S3) is folded along the line (L3) and glued above the central sector (S1), as shown in fig. 3.

The lower sector (S2) is folded along the line (L2) and glued above the central sector (S1), as shown in fig. 4.

The second cover (3) is obtained by overlapping and gluing the three sectors (S1, S2 and S3), while the lateral sector (S4) basically coincides with the front cover (2), which can be given higher thickness by means of a fifth sector (S5) (drawn with a broken line only in fig. 2) folded and glued against the internal side of the lateral sector (S4).

Attention is drawn on the semi-circular ears (6) obtained along the perimeter of the openings (4 and 5) and designed to be positioned along the semi-circular border of the said opening (B) in order to make it easier for the user to insert his index finger inside the opening and grab the disk (D) to extract it.

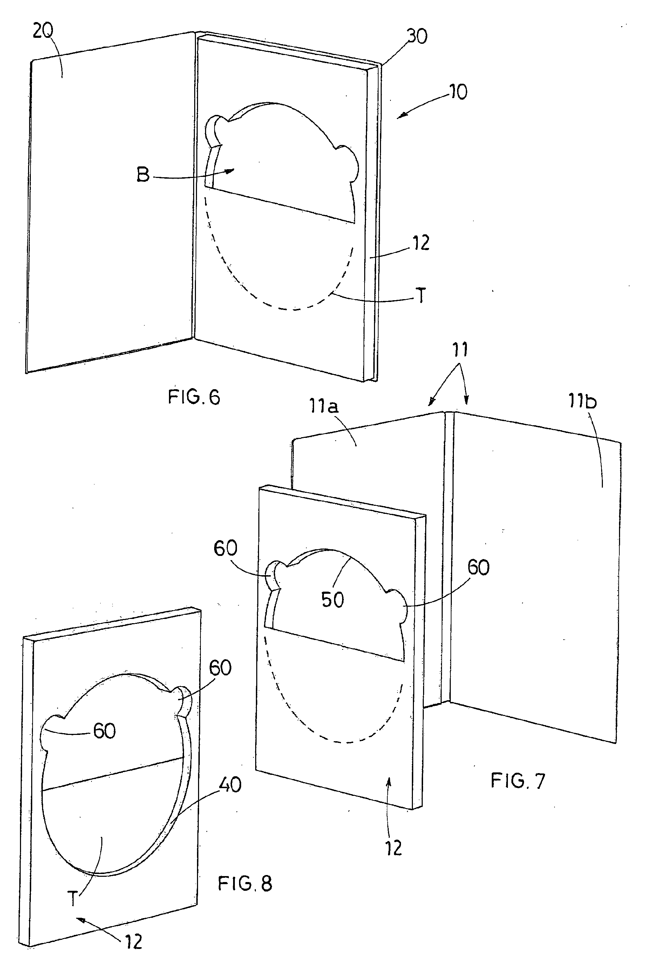

Figures 6 to 8 refer to a second embodiment of the sleeve of the invention, which consists in a sleeve (10) with book configuration, being formed of a folding pair of covers, a front cover (20) and a back cover (30), on which an internal pocket (T) is obtained to exactly house the disk (D), leaving one half of the disk uncovered.

As shown in figures 7 and 8, the case (10) is composed of two elements, that is to say a folding element (11) formed of a pair of identical pages (11 a and 11 b), and a punched insert (12), made of thick cardboard and designed to be glued on the inside of the second page (11 b) of the folding element (11) in order to generate the back cover (30) with pocket (T).

More precisely, the insert (12) has a rectangular shape and a semi-circular opening (50) designed to generate the semi-circular opening (B) at the end of the production cycle of the sleeve (10).

As shown in fig. 8, the back of the insert (12) is provided with a circular housing (40) in concentric position with respect to the semi-circular opening (50), having the same diameter as the opening (50) and designed to generate the circular housing (A) at the end of the production cycle of the sleeve (10).

Also in this case, semi-circular ears (60) are obtained along the perimeter of the semi-circular opening (50) .

It is understood that the same constructive techniques can be used to obtain a sleeve (1 or 10) provided with a second internal pocket obtained on the front cover (2 or 20), while still falling within the present inventive concept and patent protection.

## Claims

1. Sleeve for CDs or DVDs, of the type provided with a book-shaped structure, being formed of a folding pair of covers, a front cover (2, 20) and a back cover (3, 30), **characterised by** the fact that the covers (2, 20; 3,30) of the said sleeve (1,10) are made of paper or cardboard and by the fact that at least the said back cover (3, 30) is provided with an internal pocket (T), with compartment consisting in a circular housing (A) with the same diameter as the disk (D) and opening (B) having a semi-circular profile concentric with the circular housing (A).

2. Sleeve for CDs or DVDs, **characterised by** the fact that it is obtained from a suitably punched sheet, folded and glued that, in the plan view, is composed of four identical rectangular sectors separated by thin notches that act as folding line (L2, L3 e L4), i.e.:
- one central sector (S1);
- one sector (S3) above the central sector (S1) with a circular opening (4) designed to generate the circular housing (A) at the end of the production cycle of the sleeve (1);
- one sector (S2) under the sector (S1) with a semi-circular opening (5) designed to generate the semi-circular opening (B) at the end of the production cycle of the sleeve (1);
- one lateral sector (S4) situated on the left side of the central sector (S1) that coincides with the front cover (2).

3. Sleeve for CDs or DVDs as claimed in claim 2, **characterised by** the fact that the lateral sector (S4) is adjacent to a fifth sector (S5) designed to be folded and glued against the internal side of the lateral sector (S4) to obtain a front cover (2) having double thickness compared to the aforementioned single sheet.

4. Sleeve for CDs or DVDs as claimed in claim 1, **characterised by** the fact that it is formed of a folding element (11) formed of a pair of identical pages (11 a and 11 b) and a punched insert (12) designed to be glued on the inside of the second page (11 b) of the folding element (11) in order to generate the back cover (30) with pocket (T); it being provided that the insert (12) has a rectangular shape and a semi-circular opening (50) designed to generate the semi-circular opening (B) at the end of the production cycle of the sleeve (10), while a circular housing (40) is obtained on the back of the insert (12) in concentric position with respect to the semi-circular opening (50), having the same diameter as the opening (50) and being designed to generate the circular housing (A) at the end of the production cycle of the sleeve (10).

5. Sleeve for CDs or DVDs as claimed in one or more of the above claims, **characterised by** the fact that the openings (4, 40; 5, 50) are respectively provided with identical ears (6, 60) obtained along the perimeter and overlapped mutually.
